(19)

**Europäisches Patentamt**

**European Patent Office**

**Office européen des brevets**

(11) **EP 3 885 384 A1**

(12) **EUROPEAN PATENT APPLICATION**

(43) Date of publication:
**29.09.2021 Bulletin 2021/39**

(51) Int Cl.:
**C08G 18/00** *(2006.01)*          **C08G 18/22** *(2006.01)*
**C08G 18/76** *(2006.01)*          **C08K 5/02** *(2006.01)*
**C08K 5/3412** *(2006.01)*          **C08K 5/45** *(2006.01)*

(21) Application number: **20165326.8**

(22) Date of filing: **24.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG
51373 Leverkusen (DE)**

(72) Inventors:
• **FRICK-DELAITTRE, Elena
50679 Köln (DE)**
• **WESTHUES, Stefan
51379 Leverkusen (DE)**
• **WOLF, Aurel
42489 Wülfrath (DE)**

• **KOOPMANS, Carsten
40723 Hilden (DE)**
• **KÖNIG, Thomas
51375 Leverkusen (DE)**
• **GÜRTLER, Christoph
50735 Köln (DE)**
• **LAEMMERHOLD, Kai
52078 Aachen (DE)**
• **THIEL, Daniel
51375 Leverkusen (DE)**
• **MOVAHHED, Sohajl
50674 Köln (DE)**

(74) Representative: **Levpat
c/o Covestro AG
Gebäude 4825
51365 Leverkusen (DE)**

(54) **METHOD FOR THE PRODUCTION OF THERMOPLASTIC POLYOXAZOLIDINONES**

(57)      A process for producing thermoplastic polyoxazolidinones comprising copolymerization of a diisocyanate compound (A) with a bisepoxide compound (B) in the presence of a catalyst (C) and a compound (D) optionally in a solvent (E), wherein the compound (D) is one or more compounds selected from the group consisting of monofunctional isocyanate, monofunctional epoxide, cyclic carbonate, monofunctional alcohol, monofunctional amine preferred monofunctional epoxide, wherein the process is performed at reaction temperatures of $\geq$ 178 °C to $\leq$ 230 °C, preferred $\geq$ 182 °C to $\leq$ 220 °C, more preferred $\geq$ 188 °C to $\leq$ 210 °C ; most preferred $\geq$ 190 °C to $\leq$ 205 °C, wherein the bisepoxide compound (B) comprises 2,4'-isopropylidenediphenol diglycidyl ether (2,4' BADGE) and 4,4'-isopropylidenediphenol diglycidyl ether (4,4' BADGE); and wherein the molar ratio of 2,4'-isopropylidenediphenol diglycidyl ether (2,4' BADGE) is from $\geq$3 mol-% to $\leq$11 mol preferable $\geq$4 mol-% to $\leq$9 mol more preferable $\geq$5 mol-% to $\leq$8 mol related to the sum of 2,4'-isopropylidenediphenol diglycidyl ether (2,4' BADGE) and 4,4'-isopropylidenediphenol diglycidyl ether (4,4' BADGE).The invention is also related to the resulting thermoplastic polyoxazolidinone.

**EP 3 885 384 A1**

**Description**

A process for producing thermoplastic polyoxazolidinones comprising copolymerization of a diisocyanate compound (A) with a bisepoxide compound (B) in the presence of a catalyst (C) and a compound (D) optionally in a solvent (E), wherein the compound (D) is one or more compounds selected from the group consisting of monofunctional isocyanate, monofunctional epoxide, cyclic carbonate, monofunctional alcohol, monofunctional amine preferred monofunctional epoxide, wherein the process is performed at reaction temperatures of $\geq 178\ °C$ to $\leq 230\ °C$, preferred $\geq 182\ °C$ to $\leq 220\ °C$, more preferred $\geq 188\ °C$ to $\leq 210\ °C$ ; most preferred $\geq 190\ °C$ to $\leq 205\ °C$, wherein the bisepoxide compound (B) comprises 2,4'-isopropylidenediphenol diglycidyl ether (2,4' BADGE) and 4,4'-isopropylidenediphenol diglycidyl ether (4,4' BADGE); and wherein the molar ratio of 2,4'-isopropylidenediphenol diglycidyl ether (2,4' BADGE) is from $\geq 3$ mol-% to $\leq 11$ mol preferable $\geq 4$ mol-% to $\leq 9$ mol more preferable $\geq 5$ mol-% to $\leq 8$ mol related to the sum of 2,4'-isopropylidenediphenol diglycidyl ether (2,4' BADGE) and 4,4'-isopropylidenediphenol diglycidyl ether (4,4' BADGE). The invention is also related to the resulting thermoplastic polyoxazolidinone.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones especially for application of oxazolidinones as structural motif in polymer applications.

WO 2019/052991 A1 disclose a process for producing thermoplastic polyoxazolidinone comprising copolymerization of a diisocyanate compound (A) with a bisepoxide compound (B) in the presence of a catalyst (C) and a compound (D) in a solvent (E), wherein the catalyst (C) is selected from the group consisting of alkali halogenides and earth alkali halogenides, and transition metal halogenides, compound (D) is selected from the group consisting of monofunctional isocyanate, monofunctional epoxide, and wherein the process comprises step ($\alpha$) of placing the solvent (E) and the catalyst (C) in a reactor to provide a mixture, and adding the diisocyanate compound (A), the bisepoxide compound (B) and the compound (D) in step ($\beta$) to the mixture resulting from the step ($\alpha$).

In WO 2019/052994 A1 a process for producing thermoplastic polyoxazolidinone is disclosed, comprising the following steps: (i) Reaction of a diisocyanate compound (A) with a bisepoxide compound (B) in the presence a catalyst (C) and a compound (D) in a solvent (E) forming an intermediate compound (F) and (ii) Reaction of a compound (G) with the intermediate (F) formed in step (i), wherein compound (D) is one or more compounds selected from the group consisting of monofunctional isocyanate and monofunctional epoxide, and wherein compound (G) is an alkylene oxide.

Objective of the present invention was therefore to identify an optimized and simple process for the preparation of thermoplastic polyoxazolidinones with improved thermal stability than the already known thermoplastic polyoxazolidinones by the polyaddition route and especially to develop suitable process conditions. The high thermal stability of the synthesized thermoplastic polyoxazolidinones at temperatures up to 320 °C for several minutes is crucial for subsequent extrusion and injection molding processes that need to be carried out above the glass transition temperature of the thermoplastic polyoxazolidinone materials. The above discussed further improved thermal stability of the polyoxazolidinone should therefore lead to a reduced number average molar mass degradation ($\Delta Mn$) after thermal treatment e.g. by injection molding at elevated temperatures.

In addition, the latter process conditions should enable a high reactivity and reduce the reaction time to already known processes for the preparation of thermoplastic polyoxazolidinones by the polyaddition route to establish an economic process and a high selectivity towards thermoplastic polyoxazolidinone formation to minimize costs for downstreaming and optimize the performance of resulting thermoplastic polyoxazolidinones. Due to the reduced number of side products that can decompose and/or evaporate during subsequent extrusion and injection molding processes compared to the known system higher thermostability (higher decomposition temperature $T_{Donset}$) than the already known thermoplastic polyoxazolidinones should be obtained.

Surprisingly, it has been found that the problem can be solved by a process for producing thermoplastic polyoxazolidinones comprising copolymerization of a diisocyanate compound (A) with a bisepoxide compound (B) in the presence of a catalyst (C) and a compound (D) optionally in a solvent (E); wherein the compound (D) is one or more compounds selected from the group consisting of monofunctional isocyanate, monofunctional epoxide, cyclic carbonate, monofunctional alcohol, monofunctional amine preferred monofunctional epoxide;

wherein the process is performed at reaction temperatures of $\geq 178\ °C$ to $\leq 230\ °C$, preferred $\geq 182\ °C$ to $\leq 220\ °C$, more preferred $\geq 188\ °C$ to $\leq 210\ °C$; most preferred $\geq 190\ °C$ to $\leq 205\ °C$;

wherein the bisepoxide compound (B) comprises 2,4'-isopropylidenediphenol diglycidyl ether (2,4' BADGE) and 4,4'-isopropylidenediphenol diglycidyl ether (4,4' BADGE); and wherein the molar ratio of 2,4'-isopropylidenediphenol diglycidyl ether (2,4' BADGE) is from $\geq 3$ mol-% to $\leq 11$ mol preferable $\geq 4$ mol-% to $\leq 9$ mol more preferable $\geq 5$ mol-% to $\leq 8$ mol related to the sum of 2,4'-isopropylidenediphenol diglycidyl ether (2,4' BADGE) and 4,4'-isopropylidenediphenol diglycidyl ether (4,4' BADGE).

In an embodiment of the invention the reaction temperatures is $\geq 182\ °C$ to $\leq 220\ °C$, more preferred $\geq 186\ °C$

to ≤ 210 °C; most preferred ≥ 188 °C to ≤ 205 °C. If the reaction temperature is ≥ 188 °C to ≤ 210 °C; a further reduction of the number average molar mass degradation (ΔMn) is obtained.

In an embodiment of the invention the process comprises the following steps:

(α) placing the solvent (E) and the catalyst (C) in a reactor to provide a mixture, and
(β) adding the diisocyanate compound (A), the bisepoxide compound (B) and the compound (D) to the mixture resulting from step (α).

In an embodiment of the invention the diisocyanate compound (A), the bisepoxide compound (B) and the compound (D) of step (β) are added in a continuous manner to the mixture of step (α).

In an alternative embodiment of the invention the diisocyanate compound (A), the bisepoxide compound (B) and the compound (D) of step (β) are added in a step-wise manner to the mixture of step (α).

In an embodiment of the invention the diisocyanate compound (A), the bisepoxide compound (B) and the compound (D) are mixed prior the addition to the mixture resulting from step (α).

In an embodiment of the invention the mixture of the diisocyanate compound (A), the bisepoxide compound (B) and the compound (D) of step (β) are added in a continuous manner to the mixture of step (α).

In an alternative embodiment of the invention the mixture of the diisocyanate compound (A), the bisepoxide compound (B) and the compound (D) of step (β) are added in a step-wise manner with two or more individual addition steps to the mixture of step (α).

In an embodiment of the method according to the invention step (α) is performed at reaction times of 5 min to 10 h, preferably at 30 min to 8 h and more preferably at 1h to 6 h.

In a preferred embodiment of the method according to the invention step (α) and step (β) is performed at reaction temperatures of ≥ 178 °C to ≤ 230 °C, preferred ≥ 182 °C to ≤ 220 °C, more preferred ≥ 186 °C to ≤ 210 °C; most preferred ≥ 188 °C to ≤ 205 °C.

In an embodiment of the method according to the invention step (β) is performed at reaction times of 10 min to 10 h, preferably at 30 min to 8 h and more preferably at 1h to 6 h.

*Diisocyanate compound (A)*

As used herein, the term "diisocyanate compound (A)" is meant to denote compounds having two isocyanate groups (I = 2, isocyanate-terminated biurets, isocyanurates, uretdiones, and isocyanate-terminated prepolymers).

In an embodiment of the method according to the invention the diisocyanate compound (A) is at least one compound selected from the group consisting of tetramethylene diisocyanate, hexamethylene diisocyanate (HDI), 2-methylpentamethylene diisocyanate, 2,2,4-trimethylhexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane (H12-MDI), diphenylmethane diisocyanate (MDI), 4,4'-diisocyanato-3,3'-dimethyldicyclohexylmethane, 4,4'-diisocyanato-2,2-dicyclohexyl propane, poly(hexamethylene diisocyanate), octamethylene diisocyanate, tolylene-α,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)] diisocyanate, poly(tetrafluoroethylene oxide-co-difluoromethylene oxide) α,ω-diisocyanate, 1,4-diisocyanatobutane, 1,8-diisocyanatooctane, 1,3-bis(1-isocyanato-1-methylethyl)benzene, 3,3'-dimethyl-4,4'-biphenylene diisocyanate, naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl- m- or -p-xylene diisocyanate (TMXDI) or biurets, isocyanurates or uretdiones of the aforementioned isocyanates.

More preferred the diisocyanate compound (A) is selected from the group comprising of tolylene-α,4-diisocyanate, poly(propylene glycol) tolylene-2,4-diisocyanate terminated, 2,4,6-trimethyl-1,3-phenylene diisocyanate, 4-chloro-6-methyl-1,3-phenylene diisocyanate, 3,3'-dimethyl-4,4'-biphenylene diisocyanate, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl- m- or -p-xylene diisocyanate (TMXDI), diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

And most preferred the diisocyanate compound (A) is selected from the group consisting of diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

A mixture of two or more of the aforementioned diisocyanate compounds (A) can also be used.

*Bisepoxide compound (B)*

As used herein, the term "bisepoxide compound (B)" is meant to denote compounds having two epoxide groups (F = 2).

In a preferred embodiment of the invention the bisepoxide compound (B) is at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol-A diglycidyl ether, bisphenol-A diglycidyl ether, bisphenol-F diglycidyl ether, bisphenol-S diglycidyl ether, 9,9-bis(4-glycidyloxy phenyl)fluorine, tetrabromo bisphenol-A diglycidyl ether, tetrachloro bisphenol-A diglycidyl ether, tetramethyl bisphenol-A diglycidyl ether, tetramethyl bisphenol-F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether and diglycidyl isophthalate.

More preferred the bisepoxide compound (B) is selected from the group consisting of resorcinol diglycidyl ether, bisphenol A diglycidyl ether, and bisphenol F diglycidyl ether.

Most preferred the bisepoxide compound (B) is selected from the group consisting of bisphenol A diglycidyl ether, and bisphenol F diglycidyl ether.

A mixture of two or more of the aforementioned bisepoxide compounds (B) can also be used.

In a preferred embodiment of the invention the molar ratio of 2,4'-isopropylidenediphenol diglycidyl ether (2,4' BADGE) is from ≥4 mol-% to ≤9 mol more preferable ≥5 mol-% to ≤8 mol related to the sum of 2,4'-isopropylidenediphenol diglycidyl ether (2,4' BADGE) and 4,4'-isopropylidenediphenol diglycidyl ether (4,4' BADGE).

The molecular weight of the obtained thermoplastic polyoxazolidinone is determined by the molar ratio of the bisepoxide compound (B) relative to diisocyanate compound (A) and optionally relative to the compound (D).

The molar ratio of bisepoxide compound (B) to diisocyanate compound (A) is preferably in the range from 1:2 to 2:1, more preferably in the range from 45:55 to 55:45 and even more preferably in the range 47.8:52.2 to 52.2:47.8. When the diisocyanate compound (A) is employed in excess, preferably a mono-epoxide is employed as compound (D). When the bisepoxide compound (B) is employed in excess, preferably a mono-isocyanate is employed as compound (D).

*Catalyst (C)*

In an embodiment of the invention the catalyst (C) is at least one compound selected from the group consisting of
Li(I), Rb(I), Cs(I), Ag(I), Au(I),
Mg(II), Ca(II), Sr(II), Ba(II), Dy(II), Yb(II), Cu(II), Zn(II), V(II), Mo(II), Mn(II), Fe(II), Co(II) Ni(II), Pd(II), Pt(II), Ge(II), Sn(II),
Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III),
Hf(III), Nb(III), Ta(III), Cr(III), Ru(III), Os(III), Rh(III), Ir(III), Al(III), Ga(III), In(III), Tl(III), Ge(III),
Ce(IV), Ti(IV), Zr(IV), Hf(IV), Nb(IV), Mo(IV), W(IV), Ir(IV), Pt(IV), Sn(IV), Pb(IV),
Nb(V), Ta(V), Bi(V),
Mo(VI), W(VI), and
compounds represented by the formula (I)

$$[M(R1)(R2)(R3)(R4)]+n\ Yn- \qquad (I)$$

wherein M is nitrogen, phosphorous or antimony, preferred phosphorous
wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms,
wherein Y is a halide, carbonate, nitrate, sulfate or phosphate anion, more preferred a halide or carbonate and wherein n is an integer of 1, 2 or 3.

In an preferred embodiment of the invention the catalyst (C) is at least one compound selected from the group consisting of LiCl, LiBr, LiI, MgCl$_2$, MgBr$_2$, MgI$_2$, SmI$_3$, preferred LiCl and LiBr, and most preferred LiCl.

In one embodiment of the method according to the invention, the catalyst (C) is present in an amount of $\geq 0.001$ to $\leq 5.0$ weight-%, preferably in an amount of $\geq 0.01$ to $\leq 3.0$ weight-%, more preferred $\geq 0.05$ to $\leq 0.40$ weight-%, based on the theoretical yield of thermoplastic polyoxazolidinone.

*Compound (D)*

Compound (D) according to the invention is one or more compounds selected from the group consisting of monofunctional isocyanate, monofunctional epoxide, cyclic carbonate, monofunctional alcohol, monofunctional amine. Compounds comprising a mono-isocyanate and/or a mono-epoxide group are more preferred compounds and mono-epoxide groups are most preferred compounds (D) according to the invention.

In an embodiment of the invention the method for the production of the thermoplastic polyoxazolidinone is in the presence of the compound (D), wherein the compound (D) acts as a chain regulator for the thermoplastic polyoxazolidinone and further increases the thermal stability of the thermoplastic polyoxazolidinone.

In a preferred embodiment of the invention the compound (D) is at least one compound is selected from the group consisting of 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefins, cyclohexene oxide, vinylcyclohexene monoxide, limonene monoxide, butadiene monoepoxide and/or *N*-glycidyl phthalimide and/or n-hexylisocyanate, 4-tert-butylphenyl glycidyl ether, cyclohexyl isocyanate, $\omega$-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3-(2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentylphenyl isocyanate, 4-tert-butyl phenyl isocyanate, 1-naphthyl isocyanate..

In a preferred embodiment of the invention the compound (D) is selected from the group consisting of 4-tert-butylphenyl glycidyl ether, phenyl glycidyl ether, 4-isopropylphenyl isocyanate, and p-tolyl isocyanate.

In one embodiment of the method according to the invention, the compound (D) is present in an amount of $\geq 0.1$ to $\leq 7.0$ weight-%, preferably in an amount of $\geq 0.2$ to $\leq 5.0$ weight-%, more preferred $\geq 0.5$ to $\leq 3.0$ weight-%, based on the theoretical yield of the thermoplastic polyoxazolidinone (O).

In an embodiment of the invention the calculated mass ratio of the sum of diisocyanate compound (A) the bisepoxide compound (B) and the compound (D) with respect to the sum of diisocyanate compound (A) the bisepoxide compound (B) the compound (D) and the solvent (E) in step ($\alpha$) is from 5 wt-% to 30 wt-%, preferred from 8 wt-% to 26 wt-% and more preferred from 13 wt-% to 24 wt-%. The upper mass ratio of 30 wt-%, preferably 26 wt-% and more preferably 24 wt-% leads to an increased thermal stability of the thermoplastic polyoxazolidinone. The lower mass ratio of 5 wt-%, preferably 8 wt-% and more preferably 13 wt-% leads to less amount of solvent (E) optionally comprising solvent (E-1) that need to be separated and potentially purified. This leads to a more efficient overall process due to energy savings and reduction of solvent amounts.

Solvent (E)

In an embodiment of the invention the reaction is performed in a solvent (E), wherein solvents (E) are high-boiling non-protic aromatic, aliphatic, hetero aromatic, hetero aliphatic solvents.

Suitable solvents (E) are for example organic solvents such as linear or branched alkanes or mixtures of alkanes, toluene, xylene and the isomeric xylene mixtures, mesitylene, mono or polysubstituted halogenated aromatic solvents or halogenated alkane solvents, for example chlorobenzene, dichlorobenzene, dichloromethane, dichloroethane, tetrachloroethane, linear or cyclic ether such as tetrahydrofurane (THF) or methyl-tert-butylether (MTBE) or monoglyme and higher homologs, linear or cyclic ester, or polar aprotic solvents such as 1,4-dioxane, acetonitrile, *N,N*-dimethylformamide (DMF), *N,N*-dimethylacetamide (DMAc), dimethylsulfoxide (DMSO), cyclic carbonates, such as ethylene carbonate or propylene carbonate, *N*-methylpyrrolidone (NMP), sulfolane, tetramethylurea, *N,N'*-dimethylethylenurea or mixtures of the above mentioned solvents and/or with other solvents. Preferred solvent (E) is 1,2-dichlorobenzene.

Solvent (E-1)

In an embodiment of the invention the solvent (E) comprises a polar aprotic solvent (E-1). Preferred solvents (E-1) are sulfolane, monoglyme diglyme, triglyme, and gamma-butyrolactone and tetrahydrofurane (THF). The presence of the solvent (E-1) effects a better solubility of the alkali halogenides and earth alkali halogenides, and transition metal halogenides such as LiCl, LiBr, LiBr, and $MgCl_2$ as catalyst (C).

Thermoplastic polyoxazolidinone (O)

In an embodiment of the invention the thermoplastic polyoxazolidinone is further reacted with at least one compound (F) to thermoplastic polyoxazolidinone (O), wherein the compound (F) is an alkylene oxide. The addition of the compound (F) leads to a further increase of the thermal stability of the thermoplastic polyoxazolidinone (O).

Compound (F)

In an embodiment of the invention the compound (F) is added in a step-wise manner with two or more individual addition steps or in continuous manner to the thermoplastic polyoxazolidinone formed in step ($\beta$).
In one embodiment of the method according to the invention, the compound (F) is present in an amount of $\geq$ 0.1 to $\leq$ 7.0 weight-%, preferably in an amount of $\geq$ 0.2 to $\leq$ 5.0 weight-%, more preferred $\geq$ 0.5 to $\leq$ 3.0 weight-%, based on the theoretical yield of the thermoplastic polyoxazolidinone (O).
In an embodiment of the invention the compound (F) is a monofunctional alkylene oxide (F-1) and/or polyfunctional alkylene oxide (F-2).
In a preferred embodiment of the invention the compound (D) and compound (F) is the monofunctional alkylene oxide (F-1).

Monofunctional alkylene oxide (F-1)

In an embodiment of the invention wherein the monofunctional alkylene oxide (F-1) is at least one compound selected from the group consisting of phenyl glycidyl ether, o-kresyl glycidyl ether, m-kresyl glycidyl ether, p-kresyl glycidyl ether, 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefines, cyclohexene oxide, vinylcyclohexene monoxide, limonene monoxide and butadiene monoepoxide, *N*-glycidyl phthalimide and 4-tert-butylphenyl glycidyl ether.
In a more preferred embodiment of the invention the monofunctional alkylene oxide (F-1) is 4-tert-butylphenyl glycidyl ether or phenyl glycidyl ether.
In one embodiment of the method according to the invention, the compound (F-1) is present in an amount of $\geq$ 0.1 to $\leq$ 7.0 weight-%, preferably in an amount of $\geq$ 0.2 to $\leq$ 5.0 weight-%, more preferred $\geq$ 0.5 to $\leq$ 3.0 weight-%, based on the theoretical yield of the thermoplastic polyoxazolidinone (O).

Polyfunctional alkylene oxide (F-2)

In an embodiment of the invention the polyfunctional alkylene oxide (F-2) is at least one compound selected from the group consisting of resorcinol diglycidyl ether, neopentyl glycol diglycidyl ether, 1,6-hexanediol diglycidyl ether, 1,4-butanediol diglycidyl ether, hydrogenated bisphenol-A diglycidyl ether, bisphenol-A diglycidyl ether, bisphenol-F diglycidyl ether, bisphenol-S diglycidyl ether, 9,9-bis(4-glycidyloxy phenyl)fluorine, tetrabromo bisphenol-A diglycidyl ether, tetrachloro bisphenol-A diglycidyl ether, tetramethyl bisphenol-A diglycidyl ether, tetramethyl bisphenol-F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate.
More preferred the polyfunctional alkylene oxide (F-2) is selected from the group consisting of resorcinol diglycidyl ether, bisphenol A diglycidyl ether, and bisphenol F diglycidyl ether.

Most preferred the polyfunctional alkylene oxide (F-2) is selected from the group consisting of bisphenol A diglycidyl ether, and bisphenol F diglycidyl ether.

In one embodiment of the method according to the invention, the compound (F-2) is present in an amount of $\geq 0.1$ to $\leq 20.0$ weight-%, preferably in an amount of $\geq 0.2$ to $\leq 17.0$ weight-%, more preferred $\geq 0.5$ to $\leq 15.0$ weight-%, based on the theoretical yield of the thermoplastic polyoxazolidinone (O).

*Product-by-process claim*

Another aspect of the present invention is a thermoplastic polyoxazolidinone (O), obtainable by a method according to the invention.

In an embodiment of the invention the theoretical number average molecular weights Mn of the thermoplastic polyoxazolidinone (O) is preferentially $\geq 500$ to $\leq 500'000$ g/mol, more preferred $\geq 1'000$ to $\leq 50'000$ g/mol and even more preferred $\geq 5'000$ to $\leq 25'0000$ g/mol as determined with gel permeation chromatography (GPC).

Preferably, the molar amount of mono-epoxide and mono-isocyanate compound added as compound (C) fulfils certain criteria with respect to the molar amount of bisepoxide compound (B) and diisocyanate compound (A). The ratio r is defined as the absolute value of the molar amount of compound (C) (nc) to the difference between the molar amount of bisepoxide compound (B) ($n_{bisepoxide}$) and the molar amount of diisocyanate compound (A) ($n_{diisocyanate}$) according to the following formula (1)

$$r = \left| n_C / (n_{bisepoxide} - n_{diisocyanate}) \right| \qquad (1)$$

is preferably in the range of $\geq 1.5$ to $\leq 2.5$, more preferably in the range of $\geq 1.9$ to $\leq 2.1$, and particularly preferred in the range of $\geq 1.95$ to $\leq 2.05$. Without being bound to a theory, all epoxide groups and all isocyanate groups will have reacted at the end of the reaction, when such an amount of chain regulator is being used.

As an alternative, an excess of a mono-epoxide and/or a mono-isocyanate compound is added as chain regulator to the reaction mixture after the reaction between bisepoxide and diisocyanate has been completed. Without being bound to a theory, the terminal epoxide groups or the terminal isocyanate groups resulting from the reaction of the bisepoxide and the diisocyanate will be converted to inert end groups by reaction with the regulator. The excess amount of regulator is subsequently removed from the product, e.g., by extraction, precipitation, distillation, stripping or thin film evaporation.

In an embodiment of the method according to the invention the method further comprises the step of isolating the thermoplastic polyoxazolidinone obtained by the reaction, heating the thermoplastic polyoxazolidinone and pressing the thermoplastic polyoxazolidinone into a desired shape.

The present invention further relates to a spun fiber, comprising a thermoplastic polyoxazolidinone according to the invention and a textile, comprising such a spun fiber.

The method according to the invention is suited for the synthesis of oxazolidinones with interesting properties for use, for example, as pharmaceutics or antimicrobiotics.

Thermoplastic polyoxazolidinones obtained by the method according to the invention are particularly suited as polymer building blocks in polyurethane chemistry. For example, epoxy-terminated oligomeric oxazolidinones (oligooxazolidinones) may be reacted with polyols or polyamines to form foams or thermosets. Such epoxy-terminated oligomeric oxazolidinones are also suited for the preparation of composite materials. Epoxy-terminated oligomeric oxazolidinones (oligooxazolidinones) may also be reacted with their NCO-terminated counterparts to form high molecular weight thermoplastic polyoxazolidinones, which are useful as transparent, high temperature-stable materials. Thermoplastic polyoxazolidinones with high molecular weight obtained by the method according to the invention are particularly suited as transparent, high temperature-stable thermoplastic materials.

The conventional additives for these thermoplastics, such as fillers, UV stabilizers, heat stabilizers, antistatics and pigments, can also be added in the conventional amounts to the thermoplastic polyoxazolidinones according to the invention; the mould release properties, the flow properties and/or the flame resistance can optionally also be improved by addition of external mould release agents, flow agents and/or flameproofing agents (e.g. alkyl and aryl phosphites and phosphates, alkyl- and arylphosphanes and low molecular weight carboxylic acid alkyl and aryl esters, halogen compounds, salts, chalk, quartz flour, glass fibres and carbon fibres, pigments and a combination thereof. Such compounds are described e.g. in WO 99/55772, p. 15 - 25, and in the corresponding chapters of the "Plastics Additives Handbook", ed. Hans Zweifel, 5th edition 2000, Hanser Publishers, Munich).

The thermoplastic polyoxazolidinones obtained according to the current invention have excellent properties regarding stiffness, hardness and chemical resistance.

They are also useful in polymer blends with other polymers such as polystyrene, high-impact polystyrene (polystyrene modified by rubber for toughening, usually polybutadiene), copolymers of styrene such as styrene-acrylonitrile copolymer (SAN), copolymers of styrene, alpha-methylstyrene and acrylonitrile, styrene - methyl methacrylate copoylmers, styrene - maleic anhydride copolymers, styrene - maleimide copolymers, styrene - acrylic acid copolymers, SAN modified by grafting rubbers for toughening such as ABS (acrylonitrile-butadiene-styrene polymer), ASA (acrylonitrile-styrene-acrylate), AES (acrylonirile-EPDM-styrene), ACS (acrylonitrile-chlorinated polyethylene-stryrene) polymers, copolymers of styrene, alpha-methylstyrene and acrylonitrile modified with rubbers such as polybutadiene or EPDM, MBS/MABS (methyl methacrylate - styrene modified with rubber such as polybutadiene or EPDM), aromatic polyesters such as polyethylene terephthalate (PET), polybutylene terephthalate (PBT), polytrimethylene terephthalate (PTT), aliphatic polyamides such as PA6, PA6,6, PA4,6, PA 11 or PA 12, polylactic acid, aromatic polycarbonates such as the polycarbonate of bisphenol A, co-polycarbonates such as co-polycarbonates of bisphenol A and bisphenol TMC, polymethylmethacrylate (PMMA), polyvinylchloride, polymethyleneoxide (POM), polyphenylene ether, polyphenylene sulphide (PPS), polysulfones, polyetherimide (PEI), polyethylene, polypropylene.

They are also useful for blends in combination with the above polymers or others, for example blends of polycarbonate and ABS, polycarbonate and PET, polycarbonate and PBT, polycarbonate and ABS and PBT or polycarbonate and ABS and PBT.

The properties of the thermoplastic polyoxazolidinones according to this invention or blends with the above-mentioned polymers or others can also be modified by fillers such as glass fibers, hollow or solid glass spheres, silica (for example fumed or precipitated silica), talcum, calcium carbonate, titanium dioxide, carbon fibers, carbon black, natural fibers such as straw, flax, cotton or wood fibers.

Thermoplastic polyoxazolidinones can be mixed with any usual plastics additive such as antioxidants, light stabilizers, impact modifiers, acid scavengers, lubricants, processing aids, antiblocking additives, slip additives, antifogging additives, antistatic additives, antimicrobials, chemical blowing agents, colorants, optical brighteners, fillers and reinforcements as well as flame retardant additives.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

A specific type of impact modifier is an elastomer-modified graft copolymer comprising (i) an elastomeric (i.e., rubbery) polymer substrate having a Tg less than 10°C, more specifically less than -10°C, or more specifically -40° to 80°C, and (ii) a rigid polymeric shell grafted to the elastomeric polymer substrate. Materials suitable for use as the elastomeric phase include, for example, conjugated diene rubbers, for example polybutadiene and polyisoprene; copolymers of a conjugated diene with less than 50 wt% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C1-8 alkyl (meth)acrylates; elastomeric copolymers of C1-8 alkyl (meth)acrylates with butadiene and/or styrene; or combinations comprising at least one of the foregoing elastomers. materials suitable for use as the rigid phase include, for example, monovinyl aromatic monomers such as styrene and alpha-methyl styrene, and monovinylic monomers such as acrylonitrile, acrylic acid, methacrylic acid, and the C1-C6 esters of acrylic acid and methacrylic acid, specifically methyl methacrylate.

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

Impact modifiers are generally present in amounts of 1 to 30 wt%, specifically 3 to 20 wt%, based on the total weight of the polymers in the flame retardant composition. An exemplary impact modifier comprises an acrylic polymer in an amount of 2 to 15 wt%, specifically 3 to 12 wt%, based on the total weight of the flame retardant composition.

The composition may also comprise mineral fillers. In an embodiment, the mineral fillers serve as synergists. The synergist facilitates an improvement in the flame retardant properties when added to the flame retardant composition over a comparative thermoplastic polyoxazolidinone composition that contains all of the same ingredients in the same quantities except for the synergist. Examples of mineral fillers are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers. An exemplary mineral filler it talc having an average particle size of 1 to 3 micrometers..

The mineral filler is present in amounts of 0.1 to 20 wt%, specifically 0.5 to 15 wt%, and more specifically 1 to 5 wt%, based on the total weight of the flame retardant composition.

The thermoplastic polyoxazolidinones can also be colored with a whole range of soluble organic dyes and with pigment dyes, which can be either organic or inorganic.

Further possible uses of the thermoplastic polyoxazolidinones according to the invention are:

01. Housing for electrical appliances (e.g. household appliances, computers, mobile phones, display screens, television), including transparent or translucent housing parts like lamp covers.
02. Light guide panels and BLUs
03. Optical Data Storage (CD, DVD, Blu-ray Discs)
04. electrically insulating materials for electrical conductors, for plug housings and plug connectors, carrier material for organic photoconductors, Chip boxes and chip supports, fuse encapsulation
05. Static dissipative / electrically conductive formulations for use in explosion protection applications and others with respective requirements
06. Optics, diffusers, reflectors, light guides as well as housings for LED and conventional Lighting, e.g. streetlights, industrial lamps, searchlights, traffic lights
07. Thermally conductive formulations for thermal management applications like heatsinks.
08. Applications for Automotive and other Transportation vehicles (cars, buses, trucks, railway, aircrafts, ships) as Glazing, also safety glazing, lighting (e.g. headlamp lenses, tail lights, turn signals, back-up lights, fog lights; bezels and reflectors), sun and panoramic roofs, cockpit canopies, cladding of railway or other cabins, Windscreens, interiors and exteriors parts (e.g. instrument covers, consoles, dashboards, mirror housings, radiator grilles, bumpers, spoilers),
09. EVSE and batteries
10. Metal substitution in gears, seals, supporting rings
11. Roof structures (e.g. for sports arenas, stations, conservatories, greenhouses)
12. windows (including theft-proof windows and projectile-resistant windows, teller's windows, barriers in banks),
13. partition walls
14. solar panels
15. Medical devices (components of blood pumps, auto-injectors and mobile medical-injection pumps, IV access devices, renal therapy and inhalation devices (such as nebulizers, inhalers) sterilisable surgical instruments, medical implants, oxygenators, dialyzers)
16. Foodcontact applications (tableware, dinnerware, glasses, tumblers, food containers, institutional food trays, water bottles, water filter systems)
17. sports articles, such as e.g. slalom poles or ski boot buckles.
18. household articles, such as e.g. kitchen sinks and letterbox housings.
19. safety applications (glasses, visors or optical corrective glasses, helmets, visors, riot gear (helmets and shields), safety panes)
20. Sunglasses, swimming goggles, SCUBA masks
21. Signs, displays, poster protection
22. Lightweight luggage
23. water fitting, pump impellors, thin hollow fibres for water treatment
24. Industrial pumps, valves and seals, connectors
25. Membranes
26. Gas separation
27. Coating applications (e.g. Anticorrosion paint, powder coating)

## Examples

The present invention will be further described with reference to the following examples without wishing to be limited by them.

*Diisocyanate compound (A)*

A-1: Methylene diphenyl diisocyanate (MDI 44), 98 %, Covestro AG, Germany

*Epoxide compound (B)*

B-1 BADGE    4,4'-Methylendiphenyldiglycidylether (>99 %) 4,2'-Methylendiphenyldiglycidylether (<1%) (Bisphenol-A-diglycidylether), difunctional epoxide , Epikote 162 (Hexion), purity/isomer ratio was determined via HPLC-UV analysis) The compound was used without any further purification.

B-2 BADGE    4,4'-Methylendiphenyldiglycidylether (94 %) and 4,2'-Methylendiphenyldiglycidylether (6 %), (Bisphenol-A-diglycidylether) difunctional epoxide, D.E.R. 332 (Dow), the isomer ratio was determined via HPLC-UV analysis. The compound was used without any further purification.

*Catalyst (C)*

C-1: LiCl    Lithium chloride, purity >99 %, was obtained from Sigma Aldrich

*Solvents (E)*

*1,2,4-Trichlorobenzen* (TCB), purity 99 %, anhydrous, was obtained from Sigma-Aldrich, Germany and used without any further purification.

*N*-Methylpyrrolidone (NMP), purity 99.5 %, anhydrous, was obtained from Sigma-Aldrich, Germany and was dried and stored over molecular sieves and used without any further purification.

*Sulphur containing solvent (E-1)*

Sulfolane, purity ≥99 %, anhydrous, was obtained from Sigma-Aldrich, Germany and stored over molecular sieves and used without any further purification.

*Compound (D) and (F)*

pBPGE    para-tert.-butylphenylglycidylether (94 %, Denacol EX-146, Nagase Chem Tex Corporation, Japan)

Germany

MDI 44 and LiCl, were used as received without further purification. BADGE (Epikote 162 and D.E.R 332) and sulfolane was used after melting at 50°C. NMP and TDB were used without further purification before use. pBPGE was stored in a refrigerator and used without further treatment.

Addition protocol: The diisocyanate compound (A), the bisepoxide compound (B) and the compound (D) is added to the reactor containing the catalyst (C) dissolved in the solvent (E) comprising the solvent (E-1) according to claim 1 of the present application.

*Characterisation of polyoxazolidinone*

IR-Spectroscopy

Solid state IR analyses were performed on a Bruker ALPHA-P IR spectrometer equipped with a diamond probe head. The software OPUS 6.5 was used for data treatment. A background spectrum was recorded against ambient air. Thereafter, a small sample of the polyoxazolidinone (2 mg) was applied to the diamond probe and the IR spectrum recorded averaging over 24 spectra obtained in the range of 4000 to 400 cm$^{-1}$ with a resolution of 4 cm$^{-1}$.

TGA

The stability of the thermoplastic polyoxazolidinones was characterized by thermogravimetric analysis (TGA). The measurements were performed on a Mettler Toledo TGA/DSC 1. For data analysis the software STAR$^e$ SW 11.00 was used. The sample (6 to 20 mg) was weighed in a 70 μL Alox pan (previously cleaned at 1000 °C for 7hrs), heated from 30 °C to 500 °C with a heating rate of 10 K/min under argon flow (35 mL/min) and the relative weight loss was followed in dependence of temperature. For data analysis the software STAR$^e$ SW 11.00 was used. The decomposition temperature ($T_d$) stated is the onset point determined from the step tangent of the sinusoidal weight loss curve. To study the thermal stability over time, the thermoplastic polyoxazolidinones samples (6 to 20 mg) were weighed in a 70 μL Alox pan (previously cleaned at 1000 °C for 7hrs), heated from 25 °C to the target temperature (280 °C and 300 °C respectively) with a heating rate of 10 K/min under argon flow (35 mL/min) followed by an isothermal heating for 1 h at the corresponding target temperature. The relative weight loss was followed in dependence of time. The Δwt%$^T$ given in the examples is the weight loss percentage of the sample after 1h at the target temperature T.

Micro Injection moulding

The isolated polymer products were molten and plastified within a *formica*PLAST micro injection moulding machine. The piston plastification stupuf comprises a 7 mm pre-plastification piston and a 3 mm injection piston. The polymers were pastified at 300 °C wherein the test specimens were formed within an injection moulding tool which was preheated to 140 °C. To determine the thermal robustness of the samples, GPC analysis was conducted of the material before and after the injection moulding process.

HPLC-UV

HPLC-UV measurements were conducted to determine the isomer ratio of BADGE. Therefore the samples were dissolved and diluted with acetonitrile and water and were measured immediately at pH = 7 to prevent a hydrolysis of the epoxide groups. The peak areas were used in an intensity of 1000 mAU and were detected with a wavelength of 276 nm. 4,4'-methylendiphenyldiglycidylether shows a retention time of 8.46 min while 4,2'-methylendiphenyldiglycidylether shows a retention time of 8.74 min. The molecular structure of 4,2'-methylendiphenyldiglycidylether (retention time 8.74 min) was determined by HPLC-MS and 2D-NMR spectroscopy. According to HPLC-MS analysis, the compound with a retention time of 8.74 min (in HPLC-UV) shows the identical molar mass compared to 4,4'-methylendiphenyldiglycidylether (8.46 min). In addition, the molecular structure of 4,2'-methylendiphenyldiglycidylether was validated with 2D $^1$H- and $^{13}$C-NMR spectroscopy.

GPC Analysis

GPC measurements were performed at 40 °C in a solution of LiBr (1.75 g/L) in *N,N*-dimethylacetamide (DMAc, flow rate of 1.0 mL min$^{-1}$). The column set consisted of 4 consecutive columns (GRAM precolumn, GRAM 3000, GRAM 3000, GRAM 100). Samples (concentration 2-3 g L$^{-1}$, injection volume 20 μL) were injected employing an Agilent technologies 1260 Infinity auto sampler. An RID detector was used to follow the concentration at the exit of the column. Raw data were processed using the PSS WinGPC Unity software package. Polystyrene of known molecular weight was used as reference to calculate the molecular weight distribution. The number average molecular weight measured by GPC is denominated as $M_n$(GPC) in the examples.

Reactor

The reaction was performed in a 250 mL 4 neck round bottom flask equipped with a glass reflux condenser, a gas inlet (N$_2$), a syringe pump (IP-SYRDOS2-HP-XLP from SyrDos), a glass inlet tube equipped with a temperature probe (GFX 460 from Ebro) and an overhead KPG agitator (RW20 from IKA). The round bottom flask was heated with a heating mantle from Winkler (WM/BRI/250 with a maximum heating capacity of 120 W) which was connected to the temperature probe with an RB 1691 B-S from Ebro.

Example 1: *Polymerization of MDI 44 as compound (A) and BADGE (B-1) with pBPGE as compound (D) using LiCl as compound (C) and TCB as compound (E) and sulfolane as compound (E-1) at 175 °C.*

A reactor as previously described was charged with LiCl (0.0999 g, 0.02 eq.). Then sulfolane (28 mL) and Trichlorobenzene (TCB, 95 mL) was added. The reaction is inertised with nitrogen the mixture was stirred (400 rpm) and heated to 175 °C. After 15 min at this temperature, a solution of MDI 44 (29.4920 g, 1.00 eq.), BADGE (Epikote 162, 38.5126, 0.96 eq.), and pBPGE (1.9448 g, 0.08 eq.) in TCB (85 mL) was added within a time period of 90 min. After 120 min a solution of pBPGE (4.8620 g, 0.2 eq.) in TCB (10 mL) was added in a single quick step. After 210 min NMP (112 mL) were added. The reaction was allowd to cool down to room temperature.

The completion of the reaction was confirmed by the absence of the isocyanate band (2260 cm$^{-1}$) in the IR spectrum from the reaction mixture.

The thermoplastic polyoxazolidinone was precipitated in ethanol, milled with an Ultra-turrax dispersing instrument (from IKA) and collected by filtration. The thermoplastic polyoxazolidinone was twice resuspended in ethanol, washed with ethanol once, and filtered. The thermoplastic polyoxazolidinone was then dried under vacuum at 160°C for 6 h and analysed.

In the solid state IR spectrum the characteristic signal for the oxazolidinone carbonyl group was observed at 1749 cm$^{-1}$.

Example 2: *Polymerization of MDI 44 as compound (A) and BADGE (B-1) with pBPGE as compound (D) using LiCl as compound (C) and TCB as compound (E) and sulfolane as compound (E-1) at 185 °C.*

A reactor as previously described was charged with LiCl (0.0999 g, 0.02 eq.). Then sulfolane (28 mL) and Trichlorobenzene (TCB, 95 mL) was added. The reaction is inertised with nitrogen the mixture was stirred (400 rpm) and heated to 185 °C. After 15 min at this temperature, a solution of MDI 44 (29.4920 g, 1.00 eq.), BADGE (Epikote 162, 38.5126, 0.96 eq.), and pBPGE (1.9448 g, 0.08 eq.) in TCB (85 mL) was added within a time period of 90 min. After 120 min a solution of pBPGE (4.8620 g, 0.2 eq.) in TCB (10 mL) was added in a single quick step. After 210 min NMP (112 mL) were added. The reaction was allowed to cool down to room temperature.

The completion of the reaction was confirmed by the absence of the isocyanate band (2260 $cm^{-1}$) in the IR spectrum from the reaction mixture.

The thermoplastic polyoxazolidinone was precipitated in ethanol, milled with an Ultra-turrax dispersing instrument (from IKA) and collected by filtration. The thermoplastic polyoxazolidinone was twice resuspended in ethanol, washed with ethanol once, and filtered. The thermoplastic polyoxazolidinone was then dried under vacuum at 160°C for 6 h and analysed.

In the solid state IR spectrum the characteristic signal for the oxazolidinone carbonyl group was observed at 1749 $cm^{-1}$.

Example 3: *Polymerization of MDI 44 as compound (A) and BADGE (B-2) with pBPGE as compound (D) using LiCl as compound (C) and TCB as compound (E) and sulfolane as compound (E-1) at 185 °C.*

A reactor as previously described was charged with LiCl (0.0999 g, 0.02 eq.). Then sulfolane (28 mL) and Trichlorobenzene (TCB, 95 mL) was added. The reaction is inertised with nitrogen the mixture was stirred (400 rpm) and heated to 185 °C. After 15 min at this temperature, a solution of MDI 44 (29.4920 g, 1.00 eq.), BADGE (D.E.R. 332, 38.5126, 0.96 eq.), and pBPGE (1.9448 g, 0.08 eq.) in TCB (85 mL) was added within a time period of 90 min. After 120 min a solution of pBPGE (4.8620 g, 0.2 eq.) in TCB (10 mL) was added in a single quick step. After 210 min NMP (112 mL) were added. The reaction was allowd to cool down to room temperature.

The completion of the reaction was confirmed by the absence of the isocyanate band (2260 $cm^{-1}$) in the IR spectrum from the reaction mixture.

The thermoplastic polyoxazolidinone was precipitated in ethanol, milled with an Ultra-turrax dispersing instrument (from IKA) and collected by filtration. The thermoplastic polyoxazolidinone was twice resuspended in ethanol, washed with ethanol once, and filtered. The thermoplastic polyoxazolidinone was then dried under vacuum at 160°C for 6 h and analysed.

In the solid state IR spectrum the characteristic signal for the oxazolidinone carbonyl group was observed at 1749 $cm^{-1}$.

Example 4: *Polymerization of MDI 44 as compound (A) and BADGE (B-2) with pBPGE as compound (D) using LiCl as compound (C) and TCB as compound (E) and sulfolane as compound (E-1) at 195 °C.*

A reactor as previously described was charged with LiCl (0.0999 g, 0.02 eq.). Then sulfolane (28 mL) and Trichlorobenzene (TCB, 95 mL) was added. The reaction is inertised with nitrogen the mixture was stirred (400 rpm) and heated to 195 °C. After 15 min at this temperature, a solution of MDI 44 (29.4920 g, 1.00 eq.), BADGE (D.E.R. 332, 38.5126, 0.96 eq.), and pBPGE (1.9448 g, 0.08 eq.) in TCB (85 mL) was added within a time period of 90 min. After 120 min a solution of pBPGE (4.8620 g, 0.2 eq.) in TCB (10 mL) was added in a single quick step. After 210 min NMP (112 mL) were added. The reaction was allowd to cool down to room temperature.

The completion of the reaction was confirmed by the absence of the isocyanate band (2260 $cm^{-1}$) in the IR spectrum from the reaction mixture.

The thermoplastic polyoxazolidinone was precipitated in ethanol, milled with an Ultra-turrax dispersing instrument (from IKA) and collected by filtration. The thermoplastic polyoxazolidinone was twice resuspended in ethanol, washed with ethanol once, and filtered. The thermoplastic polyoxazolidinone was then dried under vacuum at 160°C for 6 h and analysed.

In the solid state IR spectrum the characteristic signal for the oxazolidinone carbonyl group was observed at 1749 $cm^{-1}$.

Table 1: Comparison of the results of Examples to 4.

| Example | Compound (A) | (B) 2,4'-BADGE | (B) 4,4'-BADGE | Catalyst (C) | Compound (D) | T | ΔMn[1] (after IM) |
|---|---|---|---|---|---|---|---|
| | | [mol-%] | [mol-%] | | | [°C] | [g/mol] |
| 1 (comp.) | MDI 44 | 2 | 98 | LiCl | pBPGE | 175 | 688 |
| 2 (comp.) | MDI 44 | 2 | 98 | LiCl | pBPGE | 185 | 704 |
| 3 | MDI 44 | 6 | 94 | LiCl | pBPGE | 185 | 443 |
| 4 | MDI 44 | 6 | 94 | LiCl | pBPGE | 195 | 13 |
| comp.: comparative example [1]ΔMn Difference of the number average molar mass (Mn) according to the GPC analysis of the material before and after the injection moulding process | | | | | | | |

**Claims**

**1.** A process for producing thermoplastic polyoxazolidinones comprising copolymerization of a diisocyanate compound (A) with a bisepoxide compound (B) in the presence of a catalyst (C) and a compound (D) optionally in a solvent (E);

wherein the compound (D) is one or more compounds selected from the group consisting of monofunctional isocyanate, monofunctional epoxide, cyclic carbonate, monofunctional alcohol, monofunctional amine preferred monofunctional epoxide;

wherein the process is performed at reaction temperatures of $\geq$ 178 °C to $\leq$ 230 °C, preferred $\geq$ 182 °C to $\leq$ 220 °C, more preferred $\geq$ 188 °C to $\leq$ 210 °C; most preferred $\geq$ 190 °C to $\leq$ 205 °C;

wherein the bisepoxide compound (B) comprises 2,4'-isopropylidenediphenol diglycidyl ether (2,4' BADGE) and 4,4'-isopropylidenediphenol diglycidyl ether (4,4' BADGE);

and wherein the molar ratio of 2,4'-isopropylidenediphenol diglycidyl ether (2,4' BADGE) is from $\geq$3 mol-% to $\leq$11 mol preferable $\geq$4 mol-% to $\leq$9 mol more preferable $\geq$5 mol-% to $\leq$8 mol related to the sum of 2,4'-isopropylidenediphenol diglycidyl ether (2,4' BADGE) and 4,4'-isopropylidenediphenol diglycidyl ether (4,4' BADGE).

**2.** The process according to claim 1, wherein the process comprises the following steps

($\alpha$) placing the solvent (E) and the catalyst (C) in a reactor to provide a mixture, and
($\beta$) adding the diisocyanate compound (A), the bisepoxide compound (B) and the compound (D) to the mixture resulting from step ($\alpha$).

**3.** The process according to claim 2, wherein the diisocyanate compound (A), the bisepoxide compound (B) and the compound (D) of step ($\beta$) are added in a continuous manner to the mixture of step ($\alpha$).

**4.** The process according to claim 2, wherein the diisocyanate compound (A), the bisepoxide compound (B) and the compound (D) of step ($\beta$) are added in a step-wise manner to the mixture of step ($\alpha$).

**5.** The process according to any one of claims 2 to 4, wherein the diisocyanate compound (A), the bisepoxide compound (B) and the compound (D) are mixed prior the addition to the mixture resulting from step ($\alpha$).

**6.** The process according to claim 5, wherein the mixture of the diisocyanate compound (A), the bisepoxide compound (B) and the compound (D) of step ($\beta$) are added in a continuous manner to the mixture of step ($\alpha$).

**7.** The process according to claim 5, wherein the mixture of the diisocyanate compound (A), the bisepoxide compound (B) and the compound (D) of step ($\beta$) are added in a step-wise manner with two or more individual addition steps to the mixture of step ($\alpha$).

**8.** The process according to any one of claims 1 to 7, wherein the solvent (E) comprises a polar aprotic solvent (E-1).**9.** The process according any one of claims 1 to 8, wherein the catalyst (C) is at least one compound selected from the group consisting of

Li(I), Rb(I), Cs(I), Ag(I), Au(I),

Mg(II), Ca(II), Sr(II), Ba(II), Dy(II), Yb(II), Cu(II), Zn(II), V(II), Mo(II), Mn(II), Fe(II), Co(II)

Ni(II), Pd(II), Pt(II), Ge(II), Sn(II),

Sc(III), Y(III), La(III), Ce(III), Pr(III), Nd(III), Sm(III), Eu(III), Gd(III), Tb(III), Dy(III), Ho(III),

Er(III), Tm(III), Yb(III), Lu(III), Hf(III), Nb(III), Ta(III), Cr(III), Ru(III), Os(III), Rh(III), Ir(III),

Al(III), Ga(III), In(III), Tl(III), Ge(III),

Ce(IV), Ti(IV), Zr(IV), Hf(IV), Nb(IV), Mo(IV), W(IV), Ir(IV), Pt(IV), Sn(IV), Pb(IV), Nb(V), Ta(V), Bi(V),

Mo(VI), W(VI), and

compounds represented by the formula (I)

$$[M(R1)(R2)(R3)(R4)]+n \ Yn- \qquad (I)$$

wherein M is nitrogen, phosphorous or antimony, preferred phosphorous

wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C1 to C3 alkyl-bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms,

wherein Y is a halide, carbonate, nitrate, sulfate or phosphate anion, more preferred a halide or carbonate and wherein n is an integer of 1, 2 or 3;

preferably the catalyst (C) is at least one compound is selected from the group consisting of LiCl, LiBr, LiI, $MgCl_2$, $MgBr_2$, $MgI_2$, $SmI_3$, preferred LiCl, LiBr, and most preferred LiCl.

**10.** The process according to claim 8 or 9, wherein the polar aprotic solvent (E-1) is selected from the group consisting of sulfolane, monoglyme, diglyme and triglyme, and gamma-butyrolactone.

**11.** A process for the production of thermoplastic polyoxazolidinone (O), wherein the polyoxazolidinone according to any one of claims 1 to 10 is further reacted with at least one compound (F), wherein the compound (F) is an alkylene oxide.

**12.** The process according claim 11, wherein the compound (F) is a monofunctional alkylene oxide (F-1) and/or polyfunctional alkylene oxide (F-2) preferred a monofunctional alkylene oxide (F-1).

**13.** The process according to claims 12, wherein the monofunctional alkylene oxide (F-1) is at least one compound selected from the group consisting of phenyl glycidyl ether, o-kresyl glycidyl ether, m-kresyl glycidyl ether, p-kresyl glycidyl ether, 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidylether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alphaolefines, cyclohexene oxide, vinylcyclohexene monoxide, limonene monoxide, butadiene monoepoxide N-glycidyl phthalimide, and 4-tert-butylphenyl glycidyl ether preferred 4-tert-butylphenyl glycidyl ether or phenyl glycidyl ether..

**14.** Thermoplastic polyoxazolidinone (O), obtainable by a process according to one of claims 11 to 13.

**15.** Thermoplastic polyoxazolidinone (O) according to claim 14 with a number average molecular weight $M_n$ from $\geq$ 500 to $\leq$ 500'000 g/mol, more preferred $\geq$ 1'000 to $\leq$ 50'000 g/mol and even more preferred $\geq$ 5'000 to $\leq$ 25'0000 g/mol as determined with gel permeation chromatography (GPC).

Europäisches
Patentamt

European
Patent Office

Office européen
des brevets

# EUROPEAN SEARCH REPORT

Application Number

EP 20 16 5326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/022871 A1 (MÜLLER THOMAS ERNST [DE] ET AL) 25 January 2018 (2018-01-25) * paragraphs [0002], [0009], [0010]; claims 1-19 * * example 14; table 5 * * paragraph [0071] - paragraph [0076] * | 1-15 | INV. C08G18/00 C08G18/22 C08G18/76 C08K5/02 C08K5/3412 C08K5/45 |
| A,D | EP 3 456 754 A1 (COVESTRO DEUTSCHLAND AG [DE]) 20 March 2019 (2019-03-20) * paragraphs [0001], [0007] - paragraph [0009]; claims 1-15 * * paragraph [0087] - paragraph [0094]; examples * * paragraph [0082] * | 1-15 | |

TECHNICAL FIELDS SEARCHED (IPC)

C08G
C08K

The present search report has been drawn up for all claims

| Place of search | Date of completion of the search | Examiner |
|---|---|---|
| Munich | 17 August 2020 | Paulus, Florian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 20 16 5326

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2020

| Patent document cited in search report | Publication date | Patent family member(s) | | Publication date |
|---|---|---|---|---|
| US 2018022871 A1 | 25-01-2018 | CN | 107207700 A | 26-09-2017 |
| | | EP | 3256508 A1 | 20-12-2017 |
| | | ES | 2731925 T3 | 19-11-2019 |
| | | JP | 6698095 B2 | 27-05-2020 |
| | | JP | 2018507932 A | 22-03-2018 |
| | | KR | 20170118067 A | 24-10-2017 |
| | | US | 2018022871 A1 | 25-01-2018 |
| | | WO | 2016128380 A1 | 18-08-2016 |
| EP 3456754 A1 | 20-03-2019 | CN | 111094381 A | 01-05-2020 |
| | | EP | 3456754 A1 | 20-03-2019 |
| | | EP | 3681924 A1 | 22-07-2020 |
| | | KR | 20200052939 A | 15-05-2020 |
| | | TW | 201920329 A | 01-06-2019 |
| | | WO | 2019052994 A1 | 21-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019052991 A1
- WO 2019052994 A1
- WO 9955772 A

**Non-patent literature cited in the description**

- **M. E. DYEN ; D. SWERN.** *Chem. Rev.,* 1967, vol. 67, 197
- Plastics Additives Handbook. Hanser Publishers, 2000